# FASCICULE DE BREVET EUROPEEN

(11) **EP 0 907 623 B1**
(45) Date de publication et mention de la délivrance du brevet: **23.04.2003**
(21) Numéro de dépôt: 97929361.0
(22) Date de dépôt: 16.06.1997
(51) Int. Cl.: C04B 41/86

(54) **MATERIAUX COMPOSITES REFRACTAIRES PROTEGES CONTRE L'OXYDATION A HAUTE TEMPERATURE, PRECURSEURS DESDITS MATERIAUX, LEURS PREPARATIONS**
GEGEN OXIDATION BEI HÖHEREN TEMPERATUREN GESCHÜTZTE FEUERFESTE VERBUNDMATERIALIEN, VORLÄUFER DIESER MATERIALIEN UND IHRE HERSTELLUNG
REFRACTORY COMPOSITE MATERIALS PROTECTED AGAINST OXIDISING AT HIGH TEMPERATURE, PRECURSORS OF THE SAID MATERIALS, THEIR PREPARATION

(30) Priorité: 19.06.1996 LU 88773
(43) Date de publication de la demande: 14.04.1999
(73) Titulaire: COMMUNAUTE EUROPEENNE DE L'ENERGIE ATOMIQUE (EURATOM), L-2920 Luxembourg (LU)
(72) Inventeur: DUPEL, Pascal, NL-1825 AM Alkmaar (NL); VEYRET, Jean-Bernard, NL-1862 EZ Bergen (NL)
(74) Mandataire: Le Roux, Martine
(86) Numéro de dépôt international: FR9701084
(87) Numéro de publication internationale: WO97048663

(56) Documents cités:
- EP-A- 0 282 386
- DE-A- 2 540 015
- US-A- 3 811 928
- US-A- 4 457 958

## Description

La présente invention a pour objets :
- des matériaux composites réfractaires protégés contre l'oxydation à haute température;
- l'utilisation des précurseurs ou intermédiaires pour la préparation desdits matériaux;
- la préparation desdits matériaux (via celle desdits précurseurs) et celle desdits précurseurs.

La présente invention concerne, plus précisément, la protection à haute température (jusqu'à 1500 - 1 600°C), en atmosphère oxydante, de matériaux composites à matrice céramique hautement réfractaire renforcée par des fibres connues pour leur sensibilité à l'oxygène à basse température (en dessous de 900°C); lesdits matériaux composites ayant été élaborés par voie solide.

La voie solide est une troisième voie -distincte de la voie liquide et de la voie gazeuse - pour l'élaboration de matériaux composites. Elle est familière à l'homme du métier et comprend généralement les trois étapes ci-après :
- une première étape de préparation d'une barbotine (précurseur de la matrice du produit final) : par mise en suspension dans l'eau de poudres minérales adéquates (Si₃N₄, SiC ...) et d'additifs appropriés (ajouts de densification tels Al₂O₃ et Y₂O₃, dispersants et/ou agents tensioactifs ...);
- une seconde étape d'incorporation de fibres (fibres de renfort) dans ladite barbotine et de consolidation (mise en forme par filtration sous pression) de l'ensemble : à l'issue de cette étape, on vise à obtenir un produit en cru d'une densité aussi élevée que possible;
- une troisième étape de densification : il s'agit d'un frittage du produit en cru qui peut être mis en oeuvre à une température supérieure à 1 600°C, sous charge (on génère alors une pression mécanique, par exemple de 27 MPa) en atmosphère inerte ou sous pression de gaz inerte (on impose généralement une pression entre 10 et 100 bars) ; le gaz inerte intervenant consistant généralement dans l'un ou l'autre desdits contextes en de l'azote ou de l'argon; l'intervention d'argon étant préconisé avec le carbure de silicium.

Une variante de cette voie solide a été décrite dans la demande CA-A-2 145 706.

Les matériaux composites de l'art antérieur, concernés par la présente invention, i.e. les matériaux composites, élaborés par voie solide et du type rappelé ci-dessus [à matrice céramique hautement réfractaire (par exemple, matrice SiC, Si₃N₄, SiAlON) renforcée par des fibres sensibles à l'oxygène telles des fibres longues de carbone ou des fibres longues de céramique (du type SiC, Si₃N₄, Al₂O₃, par exemple) pré-revêtues d'une interphase en pyrocarbone ou nitrure de bore] présentent des propriétés mécaniques remarquables qui leur ouvrent de nombreux domaines d'application dans les industries automobile, aéronautique, aérospatiale notamment. Toutefois, dans la mesure où lesdits matériaux offrent une mauvaise résistance à l'oxydation, leur champ d'application est resté limité, notamment aux basses températures.

Les inventeurs ont donc été confrontés au problème technique de l'amélioration de la résistance à l'oxydation de tels matériaux . Pour résoudre ledit problème, ils ont conçu une protection externe originale desdits matériaux, capable d'assurer une parfaite étanchéité vis-à-vis des gaz oxydants et d'autoriser ainsi leur utilisation en milieu oxydant, dans un domaine de température compris entre 500 et 1 600°C.

Selon la présente invention, on propose donc une solution originale au problème technique de la protection des matériaux composites du type ci-dessus, contre l'oxydation à haute température.

De manière générale, le problème technique de la protection contre l'oxydation des matériaux composites a déjà été largement abordé.

Il est notamment connu de réaliser une telle protection par dépôt sur lesdits matériaux d'éléments qui constituent un verre ou qui sont susceptibles de constituer un verre, par exemple, après oxydation. Ledit verre qui présente un comportement visqueux aux températures d'utilisation des matériaux a des propriétés cicatrisantes. Ce type de protection, notamment mis en oeuvre sur des matériaux composites du type C/C, n'est toutefois plus efficace à des températures supérieures à 1 000°C.

On a également proposé, pour une protection efficace à haute température, de déposer en phase vapeur, à la surface de matériaux composites des revêtements de carbures ou nitrures. Cette solution n'est pas pleinement satisfaisante car de fortes contraintes sont générées au sein desdits matériaux revêtus, portés à haute température, dans la mesure où leur structure ne présente plus un coefficient de dilation thermique homogène.

On a préconisé enfin, selon l'enseignement de la demande EP-A-483 009 de protéger des matériaux composites en formant au sein de leur matrice ou à la surface de celle-ci une phase continue constituée par un système ternaire du type Si-B-C; ladite phase continue étant formée par infiltration chimique ou dépôt chimique en phase vapeur, à partir d'une phase gazeuse. Cette technique, comme la précédente, est d'une mise en oeuvre relativement lourde et onéreuse.

Par ailleurs, les mécanismes d'oxydation mis en oeuvre au sein d'une céramique monolithe, portée, en atmosphère oxydante, à haute température (mise en oeuvre, plus précisément au sein de la phase intergranulaire d'une telle céramique) ont été décrits. Lesdits mécanismes conduisent à la formation d'une couche protectrice obéissant à une loi de croissance parabolique, et qui constitue une barrière de diffusion pour l'oxygène.

L'idée de tirer avantage, dans le contexte de matériaux composites, de tels mécanismes d'oxydation, dans le but de générer, de façon similaire, une couche protectrice ne pouvait a priori qu'être écartée dans la mesure où la mise en oeuvre de toute oxydation altère , de manière irrévocable, les fibres présentes dans la matrice desdits matériaux composites. C'est pourtant avec cette idée en tête que les inventeurs, ont, de manière non évidente, développé la présente invention.

Selon son premier objet, ladite invention concerne des matériaux composites du type mentionné ci-dessus (plus précisément, du type à matrice céramique hautement réfractaire renforcée par des fibres sensibles à l'oxygène à basse température, lesdits matériaux composites ayant été élaborés par voie solide à partir desdites fibres et d'une barbotine renfermant de la poudre céramique et au moins un ajout de densification) protégés de l'oxydation, même à haute température. Lesdits matériaux composites protégés comportent , sur toute leur surface externe, de manière caractéristique, une couche complexe qui renferme au moins un silicate correspondant audit ajout de densification, de la silice et une phase vitreuse silicatée contenant du bore. Ladite couche complexe constitue la couche protectrice recherchée.

Les précurseurs desdits matériaux composite protégés comportent eux, sur toute leur surface externe, de manière caractéristique, au moins une couche d'un précurseur de verre borosilicaté ou une couche de verre borosilicaté.

Le lecteur aura déjà compris que les matériaux composites de l'invention comportent l'une ou l'autre desdites couches aux différents stades de la mise en oeuvre d'un traitement original destiné à générer une couche complexe protectrice à la surface de matériaux composites de l'art antérieur du type à matrice céramique hautement réfractaire renforcée par des fibres sensibles à l'oxygène à basse température, élaborés par voie solide à partir desdites fibres et d'une barbotine renfermant de la poudre céramique et au moins un ajout de densification.

La(les) couche(s) d'un précurseur de verre borosilicaté constitue(nt) évidemment un précurseur de la couche de verre borosilicaté qui elle-même constitue un précurseur de la couche complexe protectrice. On trouve au sein de ladite couche complexe protectrice, de façon caractéristique, des stigmates de la couche de verre borosilicaté intermédiaire (notamment du bore et de la silice) ainsi que des stigmates de la matrice du composite, plus précisément de l'oxydation de ladite matrice (ceci est explicité plus avant en référence à la description du procédé d'obtention des matériaux protégés de l'invention) (notamment de la silice et du(des) silicate(s) correspondant(s) au(x) ajout(s) de densification).

Les matériaux composites de l'invention - matériaux finis protégés ou intermédiaires - ont avantageusement une matrice du type SiC, Si₃N₄ ou SiAlON.

Les fibres longues de renfort qu'ils renferment consistent avantageusement en des fibres de carbone ou des fibres céramiques du type SiC, Al₂O₃, Si₃N₄, pré-revêtues d'une interface en pyrocarbone ou nitrure de bore.

La couche finale de précurseur de verre borosilicaté qui intervient dans la structure des matériaux composites intermédiaires de l'invention résulte généralement de la superposition de plusieurs couches. Elle présente généralement une épaisseur comprise entre 3 et 5 mm. Le précurseur de verre borosilicaté consiste généralement en une solution non aqueuse qui renferment des poudres d'oxyde de bore et de silice.

La couche de verre borosilicaté qui résulte d'un traitement thermique (ceci sera explicité plus avant dans la présente description) de ladite couche finale de précurseur de verre borosilicaté présente généralement elle une épaisseur d'environ 1 mm.

Pour ce qui concerne la couche complexe protectrice des matériaux composites de l'invention, elle renferme, comme précisé ci-dessus :
- au moins un silicate correspondant à l'ajout (aux ajouts) de densification renfermé(s) originellement dans la matrice desdits matériaux;
- de la silice;
- une phase vitreuse silicatée contenant du bore.

Ladite couche complexe résulte d'un traitement thermique (ceci sera explicité plus avant dans la présente description) du matériau composite revêtu de la couche de verre borosilicaté. Ladite couche complexe présente généralement une épaisseur comprise entre 200 et 300 µm.

A titre de silicate(s) correspondant à l'ajout (aux ajouts) de densification originellement présent(s) dans la matrice des matériaux composites, on trouve généralement, dans ladite couche complexe, du silicate d'yttrium et/ou d'aluminium et/ou de magnésium et/ou d'au moins une terre rare de la série des lanthanides (entre le lanthane et le lutécium, consistant avantageusement en ledit lanthane, le cérium, le néodyme ou le samarium); ce, dans la mesure où les ajouts de densification intervenants, de façon classique, lors de l'élaboration de la barbotine, consistent généralement en de l'alumine (Al₂O₃) et/ou de l'oxyde d'yttrium (Y₂O₃) et/ou de l'oxyde de magnésium (MgO) et/ou des oxydes de terres rares de la série des lanthanides (entre le lanthane et le lutécium, consistant avantageusement en ledit lanthane, le cérium, le néodyme ou le samarium).

On trouve avantageusement dans ladite couche complexe protectrice des matériaux composites de l'invention du silicate d'yttrium et/ou d'aluminium.

Selon son second objet, la présente invention concerne la préparation des matériaux composites décrits ci-dessus - matériaux composites de l'art antérieur d'un certain type (à matrice hautement réfractaire renforcée par des fibres sensibles à l'oxygène à basse température, lesdits matériaux ayant été élaborés par voie solide à partir desdites fibres et d'une barbotine renfermant de la poudre céramique et au moins un ajout de densification) efficacement protégés, de façon originale, contre l'oxydation à haute température et intermédiaires de préparation -.

Lesdits matériaux composites de l'art antérieur sont, de façon caractéristique, selon le procédé de l'invention, dans une première étape, à l'issue de laquelle on les obtient revêtus d'au moins une couche d'un précurseur de verre borosilicaté (lesdits matériaux composites ainsi revêtus - produits intermédiaires - sont nouveaux et inventifs dans la mesure où l'homme du métier, connaissant la perméabilité à l'oxygène, à haute température, du verre borosilicaté, ne les a pas conçu, n'en soupçonnant nullement l'intérêt), recouverts, sur toute leur surface externe, d'au moins une couche d'un précurseur de verre borosilicaté. Pour l'obtention d'une telle couche , on dépose sur ladite surface, une solution chargée en les éléments adéquats (B₂O₃ et SiO₂) puis on traite thermiquement le tout. Le dépôt peut être mis en oeuvre selon différentes variantes. La solution peut notamment être déposée en elle-même (enduction) ou sous la forme d'un spray. B₂O₃ étant une poudre très sensible à l'eau, on fait intervenir une solution aussi sèche que possible, par exemple une solution d'acide acétique pure, et l'on met en oeuvre la préparation (par mélange) et le dépôt de ladite solution en atmosphère inerte (sous azote, par exemple). La solution déposée est généralement séchée (traitement thermique) aux environs de 100- 200°C ... Le cycle dépôt/traitement thermique (séchage) est renouvelé sur les différentes faces du matériau autant de fois que cela s'avère nécessaire pour obtenir sur toute la surface externe de celui-ci l'épaisseur souhaitée, généralement une épaisseur de 3 à 5 mm.

Les matériaux obtenus à l'issue de cette première étape sont des produits intermédiaires ou précurseurs au sens de l'invention.

Ils sont, au cours d'une seconde étape, à l'issue de laquelle on obtient d'autres produits intermédiaires ou précurseurs de l'invention à savoir des matériaux composites du type précisé ci-dessus revêtus d'une couche de verre borosilicaté (matériaux nouveaux et inventifs dans la mesure où l'homme du métier, connaissant la perméabilité à l'oxygène, à haute température, du verre borosilicaté, ne les a pas conçus, n'en soupçonnant nullement l'intérêt), traités thermiquement en atmosphère inerte, à relativement haute température, de façon à convertir la couche (généralement les couches) de précurseur de verre en couche de verre. Cette étape du procédé de l'invention, ainsi que la précédente d'ailleurs, n'est pas per se innovante (elles ont été, selon l'art antérieur, mis en oeuvre sur des substrats différents, notamment des matériaux composites du type C/C obtenus par voie liquide ou gazeuse). Le traitement thermique est per se classique. Il est généralement mis en oeuvre à une température comprise entre 1 000 et 1 200 °C sous azote. A l'issue de celui-ci, on a généralement généré une couche de verre d'une épaisseur d'environ 1mm. Dans la mesure où ledit verre généré reste sensible à l'humidité, on préconise de conserver les matériaux composites ainsi enrobés - intermédiaires au sens de l'invention - à l'abri de ladite humidité.

Les matériaux obtenus, à l'issue de cette seconde étape, constituent également des produits intermédiaires ou précurseurs au sens de l'invention.

Lesdits matériaux recouverts de ladite couche de verre borosilicaté sont ensuite soumis, au cours d'une troisième étape, à l'issue de laquelle on obtient les produits finaux de l'invention protégés de l'oxydation à haute température, à un traitement thermique en atmosphère oxydante. Ledit traitement thermique mis en oeuvre sur un substrat éminemment original est innovant. Il est généralement mis en oeuvre dans l'air à une température supérieure ou égale à 1300°C, avantageusement pendant plusieurs heures (de façon particulièrement avantageuse, pendant plus de 5 heures). Ledit traitement thermique est destiné à produire, à l'issue de plusieurs réactions chimiques complexes qui font intervenir la matrice et sa phase intergranulaire ainsi que la couche de verre, la couche complexe de protection externe qui se caractérise en ce qu'elle renferme au moins un silicate correspondant à l'(aux) ajout(s) de densification présent(s) dans la matrice du matériau, de la silice et une phase vitreuse silicatée contenant du bore. Ladite couche, non sensible à l'humidité, empêche la diffusion de l'oxygène vers les fibres de renfort des matériaux composites ainsi protégés. Ladite couche présente généralement une épaisseur comprise entre 200 et 300 µm.

Ladite couche résulte notamment des réactions ci-après :
- oxydation de la matrice avec formation de silice;
- oxydation de la phase intergranulaire avec formation de silicate(s) (tels Y₂Si₂O₇ et/ou Al₂Si₂O₇ si Y₂O₃ et/ou Al₂O₃ sont intervenus à titre d'ajout de densification) ;
- migration des espèces correspondantes aux ajouts de densification (telles Y et/ou Al si Y₂O₃ et/ou Al₂O₃ sont intervenus à titre d'ajout de densification) vers ladite couche externe;
- évaporation partielle de la phase B₂O₃;
- migration du bore vers l'interface fibre/matrice;
- oxydation des fibres de renfort sur une faible longueur (environ 500 µm). Une telle oxydation se produit principalement durant la montée en température sous atmosphère oxydante (avant que ladite température n'atteigne 1 300°C), lorsque l'oxydation de la matrice et de la phase intergranulaire sont faibles. On préconise , selon une variante avantageuse de mise en oeuvre du procédé de l'invention, dans le but de limiter ladite oxydation, d'amorcer ledit traitement thermique, sous atmosphère inerte (sous azote par exemple) et de ne passer en atmosphère oxydante que lorsque la température est supérieure à 1 300°C;
- pénétration du verre dans les zones où les fibres sont oxydées.

Ladite couche complexe est particulièrement efficace pour protéger de l'oxydation, à haute température (jusqu'au 1 500 - 1 600°C), les matériaux composites du type précisé ci-dessus (obtenus par voie solide, avec intérvention d'ajout(s) de densification).

Ladite couche complexe peut être générée en amont de toute utilisation dudit matériau composite (à l'issue de son procédé de fabrication ) et /ou lors des premières utilisations de celui-ci, à haute température, en atmosphère oxydante.

La formation selon l'invention de ladite couche complexe de protection de matériaux composites fait intervenir, de façon originale, l'ajout (les ajouts) de densification, qui a (ont) été introduit(s), de façon classique, lors de la préparation par voie solide desdits matériaux (plus précisément lors de la première étape d'élaboration de la barbotine, pour assurer sa (leur) fonction lors de la troisième étape de densification).

De façon classique, le(s)dit(s) ajout(s) est(sont) ajouté(s) en une(des) quantité(s) qui ne dépasse(nt) pas (au total) environ 30 % en masse de la matrice (du matériau composite final (non protégé)). Dans le cadre de l'invention, il n'est a priori nul besoin de prévoir l'intervention de quantité plus importante de tel(s) ajout(s). Le procédé de l'invention est mis en oeuvre sur des matériaux composites de l'art antérieur obtenus, de façon classique, par voie solide, pour l'obtention desdits matériaux composites, protégés de l'oxydation, à haute température.

L'invention, sous ses aspects produit et procédé, est illustrée par l'exemple ci-après.

### Exemple

Des éprouvettes de dimensions 40 mm x 3 mm x 4 mm du composite C/Si₃N₄ (obtenu par voie solide, avec intervention à titre d'ajouts de densification, de Y₂O₃ (6,9 % en masse) et Al₂O₃ (3,1 % en masse)) sont rectifiées et polies après découpe de l'échantillon fritté. Les éprouvettes sont nettoyées dans un bain d'acétone chaud pendant 1 heure à 60°C pour éliminer la colle utilisée pour l'usinage, puis séchées dans une étuve pendant 1 heure à 60°C.

Parallèlement, la solution -précurseur de verre borosilicaté - contenant les oxydes de bore (B₂O₃) et de silicium (SiO₂) est préparée. On introduit 2,45 g de B₂O₃ et 0,6 g de SiO₂ (soit 20 % en masse de SiO₂) dans 15 ml d'acide acétique. Ladite solution ainsi préparée est immédiatement isolée de l'atmosphère ambiante par un couvercle relié à une bouteille d'azote. Elle est alors, sous balayage d'azote, agitée magnétiquement.

L'éprouvette à revêtir est placée sur une platine chauffante (150°C). Une micro-pipette (50 µl) est utilisée pour prélever la solution en cours d'agitation et la déposer sur les faces de l'éprouvette. Cette opération entraîne le séchage immédiat de la solution déposée, elle est répétée plusieurs fois jusqu'à l'obtention d'une épaisseur d'environ 4 mm.

L'éprouvette ainsi revêtue est alors placée sur un support en brique réfractaire que l'on introduit dans un four pour effectuer un traitement thermique à 1 100°C pendant 3 heures sous balayage d'azote. Ce traitement thermique a pour but de transformer la couche initiale de précurseur en un verre borosilicaté.

L'étape finale est un traitement thermique sous air à 1 300°C pendant 10 heures. A l'issue de ce traitement thermique oxydant, on a généré la couche finale de protection (couche originale de l'invention).

L'efficacité de ladite couche a été vérifiée.

On a mis en oeuvre un test comparatif.

On a considéré un échantillon du matériau composite de départ C/Si₃N₄ (échantillon dit vierge) et un échantillon de ce même matériau composite qui a subi le traitement de l'invention dans les conditions de l'exemple ci-dessus.

On a étudié les propriétés mécaniques desdits deux échantillons en suivant l'évolution de la contrainte avec le déplacement en test flexion 4-points (sous air) :
- à la température ambiante (20°C), dans l'air, pour l'échantillon vierge;
- à 1 300°C, dans l'air, pour l'échantillon protégé selon l'invention.

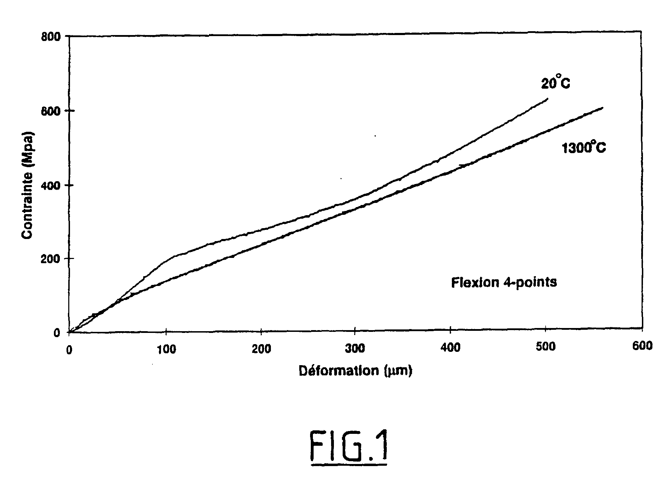

Les résultats de ce test comparatif sont représentés sur la Figure 1 annexée.

Il est clair, à la considération des courbes, que le revêtement original généré selon l'invention, assure parfaitement son rôle de protection des fibres de carbone, puisque l'essai effectué à 1 300°C ne modifie pas l'allure générale du diagramme effort-déformation.

## Revendications

1. Matériaux composites, protégés de l'oxydation, même à haute température, du type à matrice céramique hautement réfractaire renforcée par des fibres sensibles à l'oxygène à basse température, lesdits matériaux composites ayant été élaborés par voie solide à partir desdites fibres et d'une barbotine renfermant de la poudre céramique et au moins un ajout de densification, lesdits matériaux étant **caractérisés en ce qu'**ils comportent, sur toute leur surface externe, une couche complexe renfermant au moins un silicate correspondant audit ajout de densification, de la silice et une phase vitreuse silicatée contenant du bore.

2. Matériaux composites selon la revendication 1, **caractérisés en ce que** ladite matrice céramique est du type SiC, Si₃N₄ ou SiAION.

3. Matériaux composites selon l'une des revendications 1 ou 2, **caractérisés en ce que** lesdites fibres consistent en des fibres longues de carbone ou des fibres céramiques longues du type SiC, Al₂O₃ ou Si₃N₄, pré-revêtues d'une interface en pyrocarbone ou nitrure de bore.

4. Matériaux composites selon l'une quelconque des revendications 1 à 3, **caractérisés en ce qu'**ils comportent, sur toute leur surface externe, une couche complexe renfermant du silicate d'yttrium et/ou d'aluminium et/ou de magnésium et/ou d'au moins une terre rare de la série des lanthanides.

5. Utilisation pour la préparation de matériaux composites selon l'une quelconque des revendications 1 à 4, de matériaux composites du type à matrice céramique hautement réfractaire renforcée par des fibres sensibles à l'oxygène à basse température, élaborés par voie solide à partir desdites fibres et d'une barbotine renfermant de la poudre céramique et au moins un ajout de densification, lesdits matériaux comportant, sur toute leur surface externe :
- soit, au moins une couche d'un précurseur de verre borosilicaté,
- soit, une couche de verre borosilicaté.

6. Utilisation selon la revendication 5, de matériaux composites qui comportent, sur toute leur surface externe, une couche de 3 à 5 mm d'épaisseur d'un précurseur de verre borosilicaté ou une couche d'environ 1 mm d'épaisseur de verre borosilicaté.

7. Procédé de préparation de matériaux composites, protégés de l'oxydation, même à haute température, du type à matrice céramique hautement réfractaire renforcée par des fibres sensibles à l'oxygène, ledit procédé comprenant l'élaboration desdits matériaux par voie solide à partir desdites fibres et d'une barbotine renfermant de la poudre céramique et au moins un ajout de densification et comprenant, en outre, de façon caractéristique :
- le dépôt, sur toute la surface externe desdits matériaux composites obtenus par voie solide, d'au moins une couche d'un précurseur de verre borosilicaté;
- le traitement thermique, en atmosphère inerte, desdits matériaux ainsi revêtus dans le but de convertir ledit précurseur de verre en un verre borosilicaté pour l'obtention desdits matériaux revêtus d'une couche de verre borosilicaté;
- le traitement thermique, en atmosphère oxydante, desdits matériaux ainsi revêtus de la couche de verre borosilicaté pour l'obtention de ceux-ci revêtus d'une couche complexe renfermant au moins un silicate correspondant audit ajout de densification, de la silice et une phase vitreuse silicatée contenant du bore.

8. Procédé selon la revendication 7, **caractérisé en ce que** le précurseur de verre borosilicaté est déposé sur une épaisseur de 3 à 5 mm.

9. Procédé selon l'une des revendications 7 ou 8, **caractérisé en ce que**, pour l'obtention des matériaux composites revêtus de la couche de verre borosilicaté, le traitement thermique sous atmosphère inerte est mis en oeuvre entre 1 000 et 1 200° C.

10. Procédé selon l'une quelconque des revendications 7 à 9, **caractérisé en ce que** le traitement thermique en atmosphère oxydante des matériaux composites revêtus de la couche de verre borosilicaté est mis en oeuvre dans l'air à une température supérieure ou égale à 1 300° C.

11. Procédé selon la revendication 10, **caractérisé en ce que** les matériaux composites revêtus de la couche de verre borosilicaté sont maintenus en atmosphère inerte tant que la température n'a pas dépassé 1 300°C.

## Claims

1. Composite materials protected against oxidation, even at high temperature, of the type having a highly refractive ceramic matrix reinforced by fibers that are sensitive to oxygen at low temperature, said composite materials being made by a solid process from said fibers and a slip containing ceramic powder and at least one densification additive, said materials being **characterized in that** they comprise, over their entire outside surface, a complex layer containing at least one silicate corresponding to said densification additive, silica, and a vitreous boron-containing silicate phase.

2. The composite materials according to claim 1, **characterized in that** said ceramic matrix is of the SiC, Si₃N₄, or SiAlON type.

3. The composite materials according to claim 1 or 2, **characterized in that** said fibers consist in long carbon fibers or long ceramic fibers of the SiC, Al₂O₃, or Si₃N₄ type precoated with an interface of pyrolytic carbon or of boron nitride.

4. The composite materials according to any one of claims 1 to 3, **characterized in that** they include, over their entire outside surface, a complex layer containing yttrium silicate and/or aluminum silicate and/or magnesium silicate and/or the silicate of at least one rare earth from the lanthanide series.

5. Use, for the preparation of composite materials according to any one of claims 1 to 4, of composite materials of the type having a highly refractive ceramic matrix reinforced by fibers that are sensitive to oxygen at low temperature, said composite materials being made by a solid process from said fibers and a slip containing ceramic powder and at least one densification additive, said materials comprising over their entire outside surface :
• either at least one layer of a precursor of borosilicate glass,
• or a layer of borosilicate glass.

6. Use according to claim 5, of composite materials which comprise, over their entire outside surface, a 3 mm to 5 mm thick layer of a borosilicate glass precursor or a layer of borosilicate glass that is about 1 mm thick.

7. A method of preparing composite materials, protected against oxidation, even at high temperature, said composite materials being of the type having a highly refractory ceramic matrix reinforced by fibers that are sensitive to oxygen, said method comprising making said materials by a solid process from said fibers and a slip containing ceramic powder and at least one densification additive, and also comprising, in characteristic manner:
• depositing over the entire outside surface of said composite materials obtained by a solid process, at least one layer of a precursor of a borosilicate glass;
• performing heat treatment in an inert atmosphere on said coated materials in order to convert said glass precursor into a borosilicate glass to obtain said materials coated with a layer of borosilicate glass;
• performing heat treatment in an oxidizing atmosphere to said materials coated with the layer of borosilicate glass to obtain said materials coated with a complex layer containing at least one silicate corresponding to said densification additive, silica, and a vitreous boron-containing silicate phase.

8. The method according to claim 7, **characterized in that** the borosilicate glass precursor is deposited to a thickness of 3 mm to 5 mm.

9. The method according to claim 7 or 8, **characterized in that** to obtain composite materials coated with the layer of borosilicate glass, the heat treatment under an inert atmosphere is implemented at a temperature in the range 1000°C to 1200°C.

10. The method according to any one of claims 7 to 9, **characterized in that** the heat treatment under an oxidizing atmosphere of the composite materials coated with the layer of borosilicate glass is implemented in air at a temperature greater than or equal to 1300°C.

11. The method according to claim 10, **characterized in that** the composite materials coated with the layer of borosilicate glass are maintained in an inert atmosphere until the temperature has reached 1300°C.

## Patentansprüche

1. Verbundmaterialien, die selbst bei hoher Temperatur gegen Oxidation geschützt sind, vom Typ mit hoch-hitzefester Keramikmatrix, die durch bei niedriger Temperatur sauerstoffempfindliche Fasern verstärkt ist, wobei die Verbundmaterialien auf dem Festkörperweg ausgehend von den Fasern und einer Keramikpulver und mindestens einen Verdichtungszusatz enthaltenden Aufschlämmung hergestellt sind,
**dadurch gekennzeichnet, dass** sie auf ihrer gesamten Außenoberfläche eine komplexe Schicht aufweisen, die mindestens ein zu dem Verdichtungszusatz korrespondierendes Silicat, Siliciumoxid und eine Bor enthaltende silicatische glasartige Phase beinhaltet.

2. Verbundmaterialien nach Anspruch 1,
**dadurch gekennzeichnet, dass** die Keramikmatrix vom Typ SiC, Si₃N₄ oder SiAION ist.

3. Verbundmaterialien nach Anspruch 1 oder 2,
**dadurch gekennzeichnet, dass** die Fasern aus langen Kohlenstoff-Fasern oder aus langen Keramik-Fasern vom Typ SiC, Al₂O₃ oder Si₃N₄, die mit einer Zwischenschicht aus Pyrokohlenstoff oder Bornitrid vorbeschichtet sind, bestehen.

4. Verbundmaterialien nach einem der Ansprüche 1 bis 3,
**dadurch gekennzeichnet, dass** sie auf ihrer gesamten Außenoberfläche eine komplexe Schicht aufweisen, die Yttriumsilicat und/oder Aluminiumsilicat und/oder Magnesiumsilicat und/oder Silicat mindestens eines Seltenerdelements der Lanthanidenreihe beinhaltet.

5. Verwendung zur Herstellung von Verbundmaterialien nach einem der Ansprüche 1 bis 4, von Verbundmaterialien vom Typ mit hoch-hitzefester, durch bei niedriger Temperatur sauerstoffempfindliche Fasern verstärkter Keramikmatrix, die ausgehend von den Fasern und einer Aufschlämmung, die Keramikpulver und mindestens einen Verdichtungszusatz beinhaltet, auf dem Festkörperweg hergestellt sind, wobei die Materialien auf ihrer gesamten Außenoberfläche
- entweder mindestens eine Schicht eines Vorläufers von borosilicatischem Glas,
- oder eine Schicht aus borosilicatischem Glas
aufweisen.

6. Verwendung nach Anspruch 5 von Verbundmaterialien, die auf ihrer gesamten Außenoberfläche eine Schicht aus einem Vorläufer von borosilicatischem Glas von 3 bis 5 mm Dicke oder eine Schicht aus borosilicatischem Glas von etwa 1 mm Dicke aufweisen.

7. Verfahren zur Herstellung von Verbundmaterialien, die selbst bei hoher Temperatur gegen Oxidation geschützt sind, vom Typ mit hoch-hitzefester, durch sauerstoffempfindliche Fasern verstärkter Keramikmatrix, wobei das Verfahren die Herstellung der Materialien auf dem Festkörperweg ausgehend von den Fasern und einer Aufschlämmung, die Keramikpulver und mindestens einen Verdichtungszusatz beinhaltet, aufweist und **dadurch gekennzeichnet ist, dass** es außerdem aufweist:
- die Abscheidung mindestens einer Schicht aus einem Vorläufer von borosilicatischem Glas auf der gesamten Außenoberfläche der auf dem Festkörperweg erhaltenen Verbundmaterialien;
- die thermische Behandlung der so beschichteten Materialien in inerter Atmosphäre mit dem Ziel, den Glasvorläufer in ein borosilicatisches Glas umzuwandeln, um die mit einer Schicht aus borosilicatischem Glas beschichteten Materialien zu erhalten;
- die thermische Behandlung der so mit der Schicht aus borosilicatischem Glas beschichteten Materialien in oxidierender Atmosphäre, um die mit einer komplexen Schicht, die mindestens ein zu dem Verdichtungszusatz korrespondierendes Silicat, Siliciumoxid und eine Bor enthaltende, silicatische glasartige Phase beinhaltet, beschichteten Materialien zu erhalten.

8. Verfahren nach Anspruch 7,
**dadurch gekennzeichnet, dass** der Vorläufer von borosilicatischem Glas in einer Dicke von 3 bis 5 mm abgeschieden wird.

9. Verfahren nach Anspruch 7 oder 8,
**dadurch gekennzeichnet, dass** zur Erhaltung der mit der Schicht aus borosilicatischem Glas beschichteten Verbundmaterialien die thermische Behandlung in inerter Atmosphäre zwischen 1000 und 1200 °C durchgeführt wird.

10. Verfahren nach einem der Ansprüche 7 bis 9,
**dadurch gekennzeichnet, dass** die thermische Behandlung in oxidierender Atmosphäre der mit der Schicht aus borosilicatischem Glas beschichteten Verbundmaterialien in Luft bei einer Temperatur oberhalb oder gleich 1300 °C durchgeführt wird.

11. Verfahren nach Anspruch 10,
**dadurch gekennzeichnet, dass** die mit der Schicht aus borosilicatischem Glas beschichteten Verbundmaterialien in inerter Atmosphäre gehalten werden, solange die Temperatur 1300 °C nicht überschritten hat.
